Europäisches Patentamt

European Patent Office

Office européen des brevets

(11) Veröffentlichungsnummer: **0 013 409**
**A1**

# (12) EUROPÄISCHE PATENTANMELDUNG

(21) Anmeldenummer: 79105322.6

(22) Anmeldetag: 21.12.79

(51) Int. Cl.³: **E 05 F 11/48**

(30) Priorität: 08.01.79 DE 2900499

(43) Veröffentlichungstag der Anmeldung:
23.07.80 Patentblatt 80/15

(84) Benannte Vertragsstaaten:
DE FR GB IT NL SE

(71) Anmelder: HOECHST AKTIENGESELLSCHAFT
Zentrale Patentabteilung Postfach 80 03 20
D-6230 Frankfurt/Main 80(DE)

(72) Erfinder: Gübitz, Franz
Am Reitplatz 1
D-6233 Kelkheim (Taunus)(DE)

(54) **Fensterheber für verschiebbare Fenster.**

(57) Fensterheber wobei das das Gewindekabel (4) beherbergende Führungsrohr (3) zwischen Antriebsvorrichtung (1) und Transportvorrichtung (5) für das Fenster aus einem Wellrohr aus Polyacetal besteht.

FIG.1

EP 0 013 409 A1

0013409

HOECHST AKTIENGESELLSCHAFT   HOE 79/F 004       Dr.ZR/cr

Fensterheber für verschiebbare Fenster

Aus der DE-AS 1 931 472 ist ein Fensterheber bekannt, welcher als Führungsrohr ein glattes, steifes Rohr aus Acetalcopolymerisat verwendet. Polyacetale haben für diese Anwendung viele Vorteile, wie z.B. geringen Reibungswiderstand, gute mechanische Eigenschaften im geforderten Temperaturbereich von -40 bis +100°C, gutes Langzeitverhalten, gute Beständigkeit gegen Wasser, Verbrennungsmotor-Treibstoffe und Schmierfette.

Als Nachteil hat sich ergeben, daß - bedingt durch die Steifigkeit des Polyacetals - für den Einbau im Fahrzeug eine kostenaufwendige Verformung des Rohres erforderlich ist. So muß beispielsweise das Biegen der Rohre bei höheren Temperaturen von ca. 150°C im Ölbad unter genauer Temperaturführung (± 3°C) erfolgen. Um dabei Abknickungen des Rohres oder Deformationen des Rohrdurchmessers zu vermeiden, müssen solche Verformungen über Schablonen ausgeführt werden, wobei für unterschiedliche Rohrgeometrien verschiedene Schablonen und Biegeeinrichtungen notwendig sind.

Aufgabe der Erfindung war es daher, einen Fensterheber für verschiebbare Fenster, insbesondere Fahrzeugfenster bereitzustellen, der die Nachteile des Standes der Technik nicht besitzt und welcher insbesonders ein Führungsrohr aufweist, das obige Vorteile zeigt, jedoch flexibel ist.

Zur Lösung dieser Aufgabe wird vorgeschlagen, ein Wellrohr aus Acetalpolymerisaten einzusetzen.

Die Erfindung betrifft daher einen Fensterheber für ein verschiebbares Fenster, insbesondere eines Fahrzeuges, bestehend in an sich bekannter Weise aus Antriebsgehäuse

0013409

mit Antriebsritzel, und einem in einem Führungsrohr sich bewegendem Gewindekabel zur Übertragung des Antriebs auf eine Transportvorrichtung zur Verschiebung der Fensterscheibe, dadurch gekennzeichnet, daß das Führungsrohr zwischen Antriebsgehäuse und Transportvorrichtung aus einem Wellrohr aus Polyacetal besteht.

Als Wellrohre geeignet sind innen und/oder außen gewellte Rohre beliebigen Durchmessers und mit einer Steigung der Wellen zur Rohrlängsachse von 0 - 45°C. Bei einer Steigung der Welle im Innenrohr von größer als 0° kann dieselbe bevorzugt gegenläufig zur Steigung des Gewindekabels laufen. Desweiteren können auch sogenannte Verbundrohre mit glattem Innenprofil und gewelltem Außenprofil verwendet werden, wobei beide Profile vorzugsweise aus Acetalpolymerisaten bestehen. Für die Wanddicke des Wellrohres sind im allgemeinen 0,5 bis 1,5 mm ausreichend.

Zur Herstellung des Wellrohres können Vorrichtungen dienen, wie sie zum Beispiel in der DE-AS 1.255.292 oder der DE-OS 2.104.294 beschrieben sind. Das aus der Extruderdüse in warmplastischem Zustand austretende Rohr wird dabei durch sich mitbewegende Hohlformen unter Einwirkung von Innendruck mit der Wellenprofilierung versehen.

Die Herstellung der erfindungsgemäß auch einsetzbaren Verbundrohre kann beispielsweise in der gleichen Weise erfolgen, wobei jedoch die Extruderdüse entsprechend abzuwandeln ist.

Die Verbindung des Wellrohres mit der Antriebsvorrichtung bzw. der Transportvorrichtung erfolgt über Muffen. Diese werden dabei vorzugsweise durch Umspritzen an das Wellrohr angeformt, wenngleich grundsätzlich auch andere Befestigungsarten, wie beispielsweise die Hochfrequenz-

0013409

verschweißung oder mechanische Schnapverbindungen möglich sind.

Als Polyacetale, die erfindungsgemäß für die Herstellung des Wellrohres verwendet werden können, sind Homopolymere des Formaldehyds oder eines cyclischen Oligomeren des Formaldehyds, z.B. Trioxan, dessen Hydroxylendgruppen chemisch, z.B. durch Veresterung oder Verätherung, gegen Abbau stabilisiert sind, geeignet. Weiterhin umfaßt der Begriff Polyoxymethylene erfindungsgemäß auch Copolymere des Formaldehyds oder eines cyclischen Oligomeren des Formaldehyds, vorzugsweise Trioxan, wobei die Copolymeren neben Oxymethyleneinheiten in der Hauptvalenzkette Oxyalkyleneinheiten mit mindestens zwei, bevorzugt zwei bis acht und speziell zwei bis vier benachbarten Kohlenstoffatomen aufweisen und primäre Alkoholendgruppen besitzen. Der Comonomerenanteil in den Copolymeren beträgt zweckmäßigerweise 0,1 bis 15, vorzugsweise 0,1 bis 5 Gew.-%.

Als Verbindungen, die für die Copolymerisation mit Formaldehyd oder cyclischen Oligomeren des Formaldehyds, vorzugsweise Trioxan, geeignet sind, werden vor allem cyclische Äther, vorzugsweise mit 3, 4 oder 5 Ringgliedern und/oder cyclischen Acetalen, vorzugsweise Formale mit 5 bis 11, vorzugsweise 5, 6, 7 oder 8 Ringgliedern und/oder lineare Polyacetale, vorzugsweise Polyformale verwendet.

Als cyclische Äther kommen vor allem Epoxide, z.B. Äthylenoxid und Propylenoxid in Frage.

Als cyclische Acetale eignen sich vor allem cyclische Formale von aliphatischen oder cycloaliphatischen $\alpha$, $\omega$-Diolen mit 2 bis 8, vorzugsweise 2, 3 oder 4 Kohlenstoffatomen, deren Kohlenstoffkette in Abständen von 2 Kohlenstoffatomen durch ein Sauerstoffatom unterbrochen sein kann, z.B. Glykolformal (1,3 Dioxolan), Propandiol-

0013409

formal (1,3-Dioxan), Butandiolformal (1,3-Dioxepan), und Diglykolformal (1, 3, 6-Trioxocan).

Als lineare Polyacetale eignen sich sowohl Homo- oder Copolymere der vorstehend definierten cyclischen Acetale als auch lineare Kondensate aus aliphatischen oder cycloaliphatischen $\alpha,\omega$-Diolen mit aliphatischen Aldehyden, vorzugsweise Formaldehyd. Insbesondere werden Homopolymere cyclischer Formale von aliphatischen $\alpha,\omega$-Diolen mit 2 bis 8, vorzugsweise 2, 3 oder 4 Kohlenstoffatomen verwendet, z.B. Poly(1,3-dioxolan), Poly(1,3-dioxan) und Poly(1,3-dioxepan).

Die erfindungsgemäß verwendeten Polyoxymethylene sind makromolekular und besitzen vorzugsweise eine lineare Struktur. Die Werte ihrer reduzierten spezifischen Viskosität (RSV), gemessen bei 140°C an einer 0,5 gewichtsprozentigen Lösung des Polymeren in $\gamma$-Butyrolacton, das 2 Gew.-% Diphenylamin als Stabilisator enthält, betragen 0,30 bis 3,0, vorzugsweise 0,5 bis 3,0 und insbesondere 0,5 bis 2 dl/g. Die Kristallitschmelzpunkte der vorgenannten Polyoxymethylene liegen im Bereich von etwa 150° bis 180°C.

Die erfindungsgemäß eingesetzten Polyoxymethylene enthalten zweckmäßigerweise übliche Stabilisatoren, wie beispielsweise in der DE-OS 2.043.498 aufgeführt.

Der übrige Aufbau des erfindungsgemäßen Gewindekabel-Fensterhebers ist bekannt und beispielsweise in der DE-AS 1.931.472 beschrieben.

Die Transportvorrichtung für das Fenster besteht dabei vorzugsweise im wesentlichen aus einer Führungseinrichtung für die Fensterscheibe sowie einem geschlitzten Metallrohr, in dem die Führungseinrichtung durch das Gewindekabel bewegt wird.

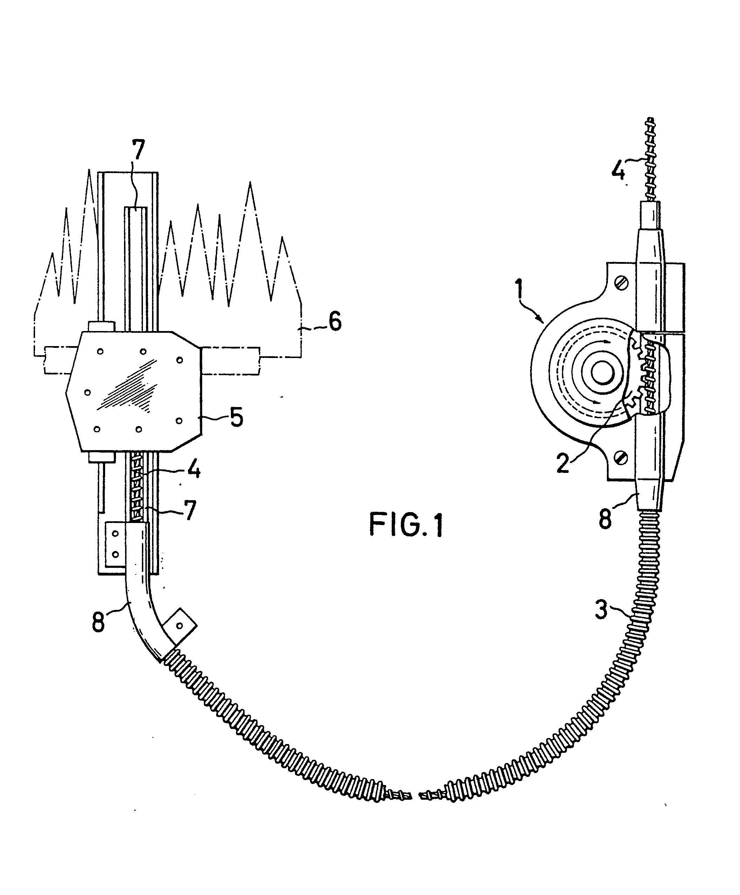

Die Erfindung wird anschließend anhand von Ausführungsbeispielen, wie sie in den Figuren 1 bis 4 dargestellt sind, erläutert.

Figur 1 zeigt einen Fensterheber bestehend aus dem Antriebsgehäuse (1) mit Antriebsritzel (2), einem Führungsrohr (3) für das Gewindekabel (4), einer Führungseinrichtung (5) für die Fensterscheibe (6), einem geschlitzten Metallrohr (7), in dem sich die Führungseinrichtung (5) bewegt und den Muffen (8), an denen das Führungsrohr befestigt ist.

Fig. 2 - 4 geben verschiedene Ausführungen des Polyacetal-Wellrohres (3) wieder.

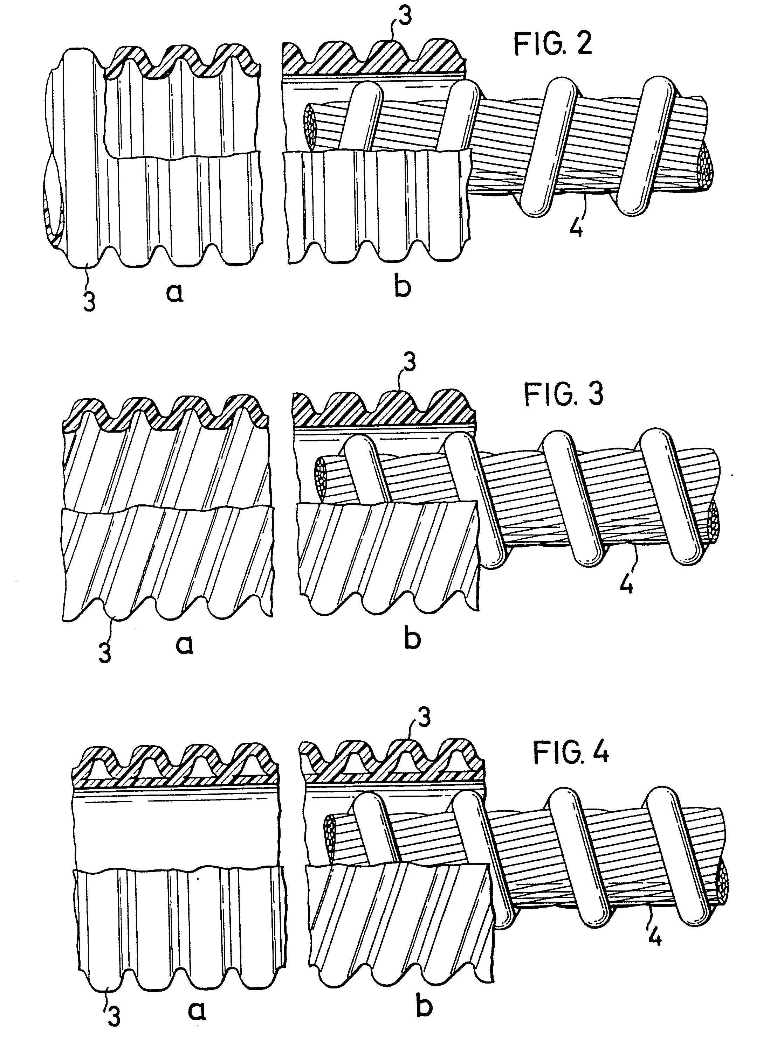

Figur 2 stellt dabei ein innen und außen gewelltes (a) bzw. ein nur außen gewelltes Rohr (b) mit Steigung Null dar.

Figur 3 veranschaulicht ein innen und außen (a) bzw. ein nur außen gewelltes Führungsrohr (b) mit Steigung.

Figur 4 zeigt ein Verbundrohr und zwar im Falle von (a) ohne und im Falle von (b) mit Steigung.

Um ein störungsfreies Gleiten des Gewindekabels im Wellrohr zu erreichen, sollte der Abstand der Wellen bei einem innen gewellten Rohr kein ganzzahliges Vielfaches der Steigung des Gewindekabels sein.

Um den Reibungswiderstand bei innengewellten Rohren noch weiter zu verringern, können die Täler der Innenwand gegebenenfalls als Depot für ein Schmiermittel wie Molybdänsulfid, Graphit oder Schmierfett udgl. dienen.

Die erfindungsgemäß eingesetzten Wellrohre aus Acetalpolymerisaten zeigen alle Vorteile des glatten Polyacetalrohres; sie können aber zusätzlich aufgrund ihrer Flexibilität kalt, d.h. ohne Schwierigkeiten zur gewünschten Form gebogen werden. Es ist nur erforderlich, die benötigte Länge vom Wellrohr abzuschneiden, die Muffen an das Wellrohr beispielsweise durch Umspritzen anzuformen und anschließend als Führungsrohr in den Fensterheber einzubauen. Die aufgespritzten Muffen sitzen durch die Wellung des Rohres so fest, daß weitere Maßnahmen zur Verschiebe- und Verdrehsicherung im allgemeinen nicht erforderlich sind. Im Bedarfsfalle können jedoch hierzu die beispielsweise aus der DE-AS 1.931.472 bekannten Maßnahmen zusätzlich Anwendung finden.

Ein weiterer Vorteil liegt erfindungsgemäß in der einfacheren und wirtschaftlicheren Lagerhaltung. Aufgrund der großen Flexibilität des Wellrohres, welche ein Biegen in jedem praxiserforderlichen Radius zuläßt, kann ein Fensterheber-Grundtyp für eine Vielzahl von Tür- und Fensterdimensionen eingesetzt werden. Es hat sich dabei gezeigt, daß ein Wellrohr aus Polyacetal einerseits so flexibel ist, daß es zu allen praxisüblichen Radien kalt gebogen werden kann, andererseits aber so steif ist, daß unerwünschte Verformungen nach dem Einbau nicht auftreten.

PATENTANSPRÜCHE

1. Fensterheber für ein verschiebbares Fenster, insbesondere eines Fahrzeuges, bestehend in an sich bekannter Weise aus Antriebsgehäuse mit Antriebsritzel, und einem in einem Führungsrohr sich bewegendem Gewindekabel zur Übertragung des Antriebs auf eine Transportvorrichtung zur Verschiebung der Fensterscheibe, dadurch gekennzeichnet, daß das Führungsrohr zwischen Antriebsgehäuse und Transportvorrichtung aus einem Wellrohr aus Polyacetal besteht.

2. Fensterheber nach Anspruch 1, dadurch gekennzeichnet, daß das Wellrohr innen und/oder außen gewellt ist, und wobei die Steigung der Wellen zur Rohrlängsachse zwischen 0 bis 45°C betragen kann und der Wellenabstand kein ganzzahliges Vielfaches der Steigung des Gewindekabels beträgt.

3. Fensterheber nach Anspruch 1 und 2, dadurch gekennzeichnet, daß bei innengewellten Rohren mit einer Steigung von größer als 0°, die Steigung des Gewindekabels der Wellrohrsteigung entgegenläuft.

4. Fensterheber nach Anspruch 1 bis 3, dadurch gekennzeichnet, daß als Polyacetal für das Wellrohr ein Copolymerisat aus Trioxan und cyclischen Äthern und/oder cyclischen Acetalen und/oder linearen Acetalen verwendet wird.

FIG.1

FIG. 2

FIG. 3

FIG. 4

Europäisches Patentamt

**EUROPÄISCHER RECHERCHENBERICHT**

0013409

Nummer der Anmeldung

EP 79 10 5322

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| D | <u>DE - A - 1 931 472</u> (GOLDE)<br>* Anspruch 2; Seite 4, Absatz 1 *<br><br>-- | 1,4 |
| | <u>FR - A - 1 422 134</u> (SMITH & SONS)<br>* Seite 3, Spalte 1, Absatz 5; Abbildung 9 *<br><br>-- | 1 |
| | <u>BE - A - 384 341</u> (FARFALLINI)<br>* Seite 2, Absatze 6,7; Abbildungen 6,7 *<br><br>-- | 1,2 |
| | <u>FR - A - 2 162 919</u> (FA. FRANKISCHE ISOLIERROHR- UND METALLWAREN-WERKE GEBRUDER KIRCHNER)<br>* Abbildungen 1-5 *<br><br>---- | 1,2 |

**KLASSIFIKATION DER ANMELDUNG** (Int Cl ³)

E 05 F 11/48

**RECHERCHIERTE SACHGEBIETE** (Int. Cl. ³)

E 05 F
F 16 C

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Grunden angeführtes Dokument

&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prufer |
|---|---|---|
| Den Haag | 09-04-1980 | NEYS |

EPA form 1503.1 06.78